(19) Europäisches Patentamt
European Patent Office
Office européen des brevets

(11) **EP 0 508 519 B1**

(12) **EUROPEAN PATENT SPECIFICATION**

(45) Date of publication and mention
of the grant of the patent:
**31.05.2000 Bulletin 2000/22**

(51) Int. Cl.⁷: **G06F 17/30**

(21) Application number: **92200891.7**

(22) Date of filing: **30.03.1992**

(54) **A method for storing bibliometric information on items from a finite source of text, and in particular document postings for use in a full-text document retrieval system**

Speicherverfahren für bibliographische Information über Daten aus einer endlichen Textquelle, und insbesondere Dokumentverbuchungen zur Verwendung in einem Suchsystem für Ganztextdokumente

Un procédé pour stocker des informations bibliographiques sur des données d'une source de texte finie, et en particulier des indexes de documents pour utilisation dans un système de recouvrement de documents plein texte

(84) Designated Contracting States:
**DE FR GB**

(30) Priority: **08.04.1991 EP 91200810**

(43) Date of publication of application:
**14.10.1992 Bulletin 1992/42**

(73) Proprietor:
**Koninklijke Philips Electronics N.V.**
**5621 BA Eindhoven (NL)**

(72) Inventor:
**Aalbersberg, Ijsbrand Jan**
**NL-5656 AA Eindhoven (NL)**

(74) Representative:
**Peters, Rudolf Johannes et al**
**INTERNATIONAAL OCTROOIBUREAU B.V.,**
**Prof. Holstlaan 6**
**5656 AA Eindhoven (NL)**

(56) References cited:
**EP-A- 0 304 191**

• JOURNAL OF THE AMERICAN SOCIETY FOR INFORMATION SCIENCE vol. 33, no. 1, September 1982, WASHINGTON US pages 285 - 293 FEDOROWICZ J. 'The Theoretical Foundation of Zipf's Law and Its Application to the Bibliographic Database Environment'
• INFORMATION PROCESSING & MANAGEMENT (INCORPORATING INFORMATION TECHNOLOGY) vol. 24, no. 5, 188, OXFORD GB pages 513 - 523 SALTON G., BUCKLEY CH. 'TERM-WEIGHTING APPROACHES IN AUTOMATIC TEXT RETRIEVAL'
• JOURNAL OF DOCUMENTATION vol. 44, no. 1, March 1988, LONDON GB pages 53 - 62 EGGHE L. 'ON THE CLASSIFICATION OF THE CLASSICAL BIBLIOMETRIC LAWS'

EP 0 508 519 B1

**Description**

FIELD OF THE INVENTION

The invention relates to a method for storing bibliometric information on items from a finite source of text. For the terminology used, reference is had to an article by L. Egghe, "On the Classification of the Classical Bibliometric Laws", Journal of Documentation, Vol. 44, No. 1, March 1988, pages 53-62. Bibliometric information on an item indicates everything that can be said of the item in the source, while being abstracted of the meaning of the item. By way of non-limitative examples, bibliometric information can have indications on:

- how often the item in question occurs in the source (usually a text);
- what is the spread in its occurrences, e.g., are they clustered or not;
- any spatial relationship with another item in the source;
- in what positions it occurs, such as in headers only.

As clear from the references in Egghe, bibliometry as a science is at least twenty years old. Now, a general object of the present invention is the quest for compact and easy storage and handling of the bibliometric information, in particular directed to, but not limited to retrieval and otherwise management of the text source itself. One of the key understandings of the present invention is that the bibliometric information may not be a very accurate quantity, in the sense that appreciable variation therein may leave the underlying information intact to a high degree.

SUMMARY TO THE INVENTION

According to one of its aspects, the invention provides for a method as recited in Claim 1. A linear ordering means that each item has a relative position with any other item, and can be assigned a unique rank number. The storage of the rank number is now an inexpensive surrogate for storing the bibliometric property itself, which in many cases saves 50% of the storage space, while maintaining accessibility. In the foregoing, the linear ordering may be bibliometrical or otherwise, for example alphabetical according to author, or chronologically according to date of generation. In principle, many other linear or orderings are feasible. Linked lists find another advantageous use in the present invention.

FURTHER ASPECTS OF THE INVENTION

In a particular field of use, the invention relates to a method for storing document postings (vide infra) for use in a full-text document retrieval system, and in particular the kind of retrieval wherein each lexical term in a document gets assigned a weight, the weight indicating the relevance of the term in the document. The invention is particularly advantageous if the system is used in a dynamic environment. Conventional weight assigning has been described in G. Salton and C. Buckley, "Term-weighting Approaches in Automatic Text Retrieval", Information Processing and Management 24, (1988), 513-523, especially page 518 that lists various weighting systems as based on various usages of such weight components as term frequency, collection frequency, and normalization. In a dynamic retrieval environment, the set of documents is not fixed, especially because documents may be added and/or deleted. Usually, the use of weights is that some kind of ranking of the documents is effected according to their matching with some exemplary term, term string or set, or text, taking into account the matching of on weight basis. Ater the ranking of the documents, it would be up to a user to access one or more of the whole documents for further use, but the latter operation does not form part of the present invention. The invention is based firstly, on the insight that the weight is not a very accurate quantity, but is linked accurately enough to another quantity, to wit the occurrence frequency of each lexical term so that the latter may be used instead. Secondly, the storage of postings that relate to the same lexical term may be linked in a chain by including in each posting adequate pointer information. Herein, a posting is defined as an information item that is uniquely associated to a particular lexical term in a document, and therefore, to all occurrences of that same particular lexical term in the single document. The posting comprises at least an identifier of the document in question and also an indication of the weight of the associated term in the document. In an extended version, the posting also comprises an identifier of the lexical term itself. According to yet another aspect, the invention provides a method as recited supra that allows for restricted storage space, uncompromised searching speed, while still allowing for expanding the data base and replacing documents by other documents in that it provides a method, for storing document postings in a full-text document retrieval system, using a postulated relationship between a term's occurrence frequency rank and it's nominal weight, said relationship depending exclusively on this rank and on the number of different terms in a particular document as variables, said method comprising the steps of:

a. for any lexical term in said particular document calculating it's occurrence frequency and therefrom said lexical term's rank in the occurrence frequency ordering;

b. storing a normalization factor as governed by said relationship;

c. assigning to each term in the particular document a sequence number based on standard address mapping transform that is uniform among said documents and preserving said rank order;

d. for each document storing a sequence of postings each assigned to a unique lexical term in the document according to its assigned sequence number, each posting comprising:

d1. an identifier for a next successive document comprising the same unique term;

d2. an offset value operating as pointer in said next successive document while indicating said unique term's posting's sequence number in said next successive document as well as a direct indication of that unique term's weight in the document so identified.

The invention also relates to a document retrieval system based on a data base generated by any of the preceedings. The data base could be provided on CD-ROM or on-line, whereas the retrieval could make use of a random-accessible store.

Further advantageous aspects are recited in dependent Claims.

BRIEF DESCRIPTION OF THE FIGURES

Hereinafter, first a background consideration is presented for the invention, after which a preferred embodiment is detailed in and by the following Figures which respectively show:

Figure 1 a flow chart of the storage process of a document;

Figure 2 a block diagram of the retrieval organization.

BACKGROUND CONSIDERATION

Hereinafter, we report on the compression of postings in order to store as many postings as possible in the memory of a term weighting document retrieval system. Advantageously, the memory is directly addressable, such as a solid state main computer memory, for realizing high processing speed. This resulted in a posting compression technique that reduces the storage size for postings by 25% to 50%. The compression technique does not need any extensive indexing during the insertion of new documents, and thus can be used in highly dynamic retrieval environments. Since the technique is based on the vector space retrieval model, the retrieval quality is high.

In term weighting retrieval a term weight becomes associated with each term that occurs in a text. Such a text can be either the text of a document in a document base or the text of a query as raised by a user (a document can contain more than only textual information). A term weight w, when associated with a term (or word or word stem) s in a text t, indicates the relevance of s in t, and it is a real number which usually after normalization lies between 0 and 1:0 as indication of no relevance at all and 1 as indication of a maximum relevance. Term weights are ultimately used to compute the text similarity between each document that is stored in a given document base and a query that is raised by a user. Such a query will be answered by listing all documents stored, in decreasing text similarity to the query text.

The computation of term weights can be done along various lines. Here, the following method is used. For any document base text d, query text q, and term (or word or word stem) s, let frq(s,d) and frq(s,q) be the occurrence frequency (i.e., the number of occurrences) of s in d and s in q, respectively. Then, as i equals one of the values 1, 2, 3, or 4, the document term weight docu_wght$_i$(s,d) of s in d and the query term weight quer_wght$_i$(s,q) of s in q are computed as follows:

$$docu\_wght_i(s, d) = \frac{(frq(s,d))^{1/i}}{\sqrt{\sum_{red}(frq(r,d))^{2/i}}} \qquad (1)$$

and

$$quer\_wght_i(s,q) = \frac{(frq(s,q))^{1/i} \cdot \log\frac{N}{n_s}}{\sqrt{\sum_{r \in q}((frq(r,q))^{1/i} \cdot \log\frac{N}{n_r})^2}} \qquad (2)$$

Here N is the total number of document texts stored in the document base, and $n_s$ and $n_r$ are the number of these document texts that contain the term s or r, respectively. Note that $\log N/n_s$ and $\log N/n_r$ are the so-called inverse document frequencies of s and r, respectively. Furthermore, the higher the value of i, the more these inverse document frequencies contribute to the term weights, and the less important the role of the occurrence frequencies is. As shown, standard values for i are integers in [1,4], but this is not an express limitation.

As mentioned before, document term weights and query term weights are used to compute text similarities between the documents in a document base and a query. For i = 1, 2, 3, 4, such a similarity $text\_sim_i(d,q)$ between a document text d and a query text q is calculated as the inner product of the document term weight vector and the query term weight vector (the components of these term weight vectors are the corresponding term weights for all possible terms):

$$text\_sim_i(d,q) = \sum_{s \in q} docu\_wght_i(s,d) \cdot quer\_wght_i(s,q) \qquad (3)$$

Since the document term weight vector and the query term weight vector are lengthwise normalized, the text similarity values always are between 0 and 1. Experimentally, especially with i=2 it turns out that the increasing attention for the inverse document frequencies at the cost of the decreasing attention for the raw occurrence frequencies yields better retrieval results than without such a shift in attention, and in particular, better retrieval results than with i=1. In th following, we use i=2.

It can be observed that in our formulae the inverse document frequencies (e.g., $\log N/n_s$ and $\log N/n_r$) are incorporated in the query term weights only. This is due to the fact that incorporation in the document term weights would cause a recomputation of all these term weights for each change in the document base. In other words, the solution proposed here is better suited for our target environments, which are highly dynamic. Nevertheless, despite of all the above, it is easily seen that our methods can still be considered as implementations within the vector space retrieval model.

POSTING COMPRESSION

Recalling, a posting p associated with a term s is a pair p=(d,w) , such that w is the term weight of s in the document (with document identifier) d.

In the examples below, it is assumed that there are at most 65,536 documents of which postings have to be stored. Furthermore, it is also assumed that on average there are at most 256 different terms per document and thus also postings per document. This implies that a document identifier can be stored in 2 bytes and that a unique posting identifier or pointer to a posting can be stored in only 3 bytes. Finally, it is assumed that 1 byte for the storage of a term weight is precise enough to discriminate between high- and low-relevant terms. For other choices for these parameter values the method steps as well as the advantages of the invention remain the same.

For dynamic environments we consider linked-list methods to be useful. In this direction we attempt to link all postings that are associated with the same lexical term. Firstly, a posting p=(d,w) which is associated with a term s is implemented as a triple [d,w,l] associated with s; here l is a link or pointer to a next posting triple associated with s. Secondly, all posting triples of the same document (with document identifier) d are adjacently stored in a posting triple sequence $P_d$. Thirdly, all such posting triple sequences $P_d$ are concatenated into one large posting triple sequence P, which thus encodes all the postings of all the documents in the document base. Finally, there is a table T, which returns for every term s a pointer to the first posting triple in P that is associated with s. Clearly, all postings associated with a term s can be derived by using T to enter P at the first posting triple associated with s, and then using the links to move to the succeeding posting triples associated with s.

Using this method, which groups postings per document, the insertion of a new document (with document identifier) d is easy: all its posting triples are adjacently stored at the end of P, as the posting triple sequence $P_d$. Under the assumptions previously made for the size of a document base, the method requires 6 bytes for each posting: 2 bytes for a document identifier, 1 byte for a term weight, and 3 bytes for a pointer to a next posting triple.

We present a method that reduces the storage consumption in dynamic environments with 33%. In the above, a posting $p=(d,w)$ associated with a term s was implemented as a triple $[d,w,l]$ associated with s, where l is a link or pointer to a next posting triple associated with s. This method stores all posting triples of the same document adjacently in a posting triple sequence and thus 1 can be replaced by a pair $(d',o')$, where d' is the document identifier in the next posting associated with s and o' is the offset in $P_d$ of the corresponding triple. Such a replacement assumes an additional table D, which returns for each document identifier d' the location of the first posting triple in $P_{d'}$. Assume that the table T is replaced by two tables $T_D$ and $T_O$, returning for every term s the document identifier d of the first posting associated with s and the offset in $P_d$ of the corresponding posting triple, respectively. Clearly, using $T_D$, D, and $T_O$ to enter P at the first posting triple associated with s, and then moving to succeeding posting triples associated with s by using the links and D over and over again, all postings associated with s can be derived.

Note that the document identifier d in a posting p associated with a term s is known before the corresponding posting triple $p_t$ is accessed in $P_d$:d was already part of the pointer to the triple $p_t$. And thus, the posting triple $p_t$ can be stored without the document identifier d. From the above it then follows that the n postings $p_j=(d_j,wi)$ , $1 \le j \le n$, associated with a term s, can be implemented as n posting triples $p_{tj}=[wj_j,d_{j+1},o_{j+1}]$ associated with s, where $o_{i+1}$ is the offset of $p_{t,j+1}$ in

$$P_{d_{j+1}}$$

and $d_{n+1}$ and $o_{n+1}$ are undefined.

The method requires some bookkeeping time and storage space when working with offsets and using the table D. However, under the assumptions made earlier and under the assumption that there are not more than 256 terms per document, instead of 6 bytes now only 4 bytes per posting and required: 1 byte for a term weight, 2 bytes for a document identifier, and again 1 byte for an offset. Now, assume that there exists a document with more than k terms. Then the full set of postings of this document can be split up into one or more sets of k postings, and one set of no more than k postings. Furthermore, each of these sets can be associated with a pseudo document identifier, to be coupled with each other using some auxiliary table, which relates a pseudo document identifier with the corresponding factual document identifier.

RANK-FREQUENCY LAW OF ZIPF

In this section we recall the rank-frequency law of G. Zipf, which has been discussed in the cited article by Egghe. Now, according to Zipf, a relation was established between the occurrence frequency of a term in a text and its rank number, when all terms in the text are ranked according to decreasing occurrence frequency. Informally speaking, it was noticed that the product of such an occurrence frequency and of such a rank number is approximately constant.

More formally, this rank-frequency law of Zipf can be expressed as follows. For a text t and a term s in t, let frq(s,t) be the occurrence frequency of s in t. Let t be a text containing $n \ge 1$ different terms $s_1,...,s_n$ and, without loss of generality, assume that these terms are ranked such that

$$frq(s_1,t) \ge frq(s_2,t) \ge ... \ge frq(s_n,t)$$

holds. Then the rank-frequency law of Zipf claims that there exists a constant zpf(t), such that, for every $1 \le j \le n$,

$$j.frq(s_j,t) \approx zpf(t),$$

i.e., in t the product of the rank number i of $s_i$ and the occurrence frequency $frq(s_j,t)$ of $s_j$ is approximately constant. Clearly, the Zipf constant zpf(t) depends on the text t: when the size of t increases, the occurrence frequency of the most frequent term in t and the number of different terms in t increase - according to Zipf's law they will increase evenly - and thus zpf(t) increases too.

In practice, it has been found that the law of Zipf applies best for terms that have an intermediate occurrence frequency. For an exemplary document of more than 1000 different terms, ranks 8 to 600 had a spread of no more than $\pm 25\%$ in the Zipf product value, while for ranks 40 to 300 the spread was only $\pm 10\%$.

USE OF ZIPF'S LAW

So, the rank-frequency law of Zipf implies that a term's occurrence frequency can be estimated using the term's rank number, when all terms are ranked according to decreasing occurrence frequency. More precisely: for every text t there is a constant zpf(t), such that for every term s in t the occurrence frequency of s is approximated by the quotient of zpf(t) and the rank number of s.

For the posting compression technique, described earlier, the following can be noted. First, the order in which a document's postings are stored is not relevant. Second, although they consume a considerable part of the storage required, the term weights are not compressed in the postings.

For those term weighting retrieval methods in which the term weights are computed using the occurrence frequencies of the terms only, the observations above lead us to the following advanced compression technique for the storage of the postings of a document. First, rank all the document's postings according to decreasing occurrence frequency of the corresponding term. Next, store these postings in this ranking order in memory, in the same way and with the same auxiliary tables as described supra. However, do not really store the term weights in these postings: at retrieval time they can be approximated by application of the rank-frequency law on the rank numbers of - i.e., on the offsets pointing to - the corresponding posting triples. Thus, instead of posting triples [w',d,o] only store posting tuples [d,o], and the tables $T_D$,D, and $T_O$.

Using this compression techenique it seems necessary to have access to an additional table with the predetermined Zipf constants. Furthermore, for reasons of time efficiency at moments of retrieval, it also seems economical to have access to a second table, which contains for each document the precalculated term weight normalization component (see Formula 1). However, for many terms weighting retrieval methods it turns out that both tables can be omitted, whenever the number of different terms for each document is somehow available.

So, the rank-frequency law of Zipf can be applied to store a posting of a document using 3 bytes only. Hereinafter, we detail the formulae used to approximate the term weights.

As explained, the storage and compression technique investigated is based upon the approximation of occurrence frequencies:for a text t and a term s in t, the occurrence frequency frq(s,t) of s in t can be approximated by

$$frq(s,t) \approx zpf(t)/rnk(s,t),$$

where zpf(t)is the Zipf constant associated with t and rnk(s,t) is the rank number of s in the ranking of all terms in t upon decreasing occurrence frequency (these notations will be used hereafter too). Using this formula in the document weight computations, we obtain the following formulae to approximate the document term weight of a term s in a document text d(i=1,2,3,4):

$$docu\text{-}wght_i(s,d) = \frac{(zpf(d)/rnk(s,d))^{1/i}}{\sqrt{\sum_{r \in d}(zpf(d)/rnk(r,d))^{2/i}}} = \frac{(1/rnk(s,d))^{1/i}}{\sqrt{\sum_{r \in d}(1/rnk(r,d))^{2/i}}}$$

We nicely get rid of the Zipf constant zpf(d). In consequence, the normalization coefficient associated with a document d only depends on the number of different lexical terms in d. It has been found experimentally that for high-frequency terms the document term weights are approximated too high, and that for low-frequency terms these weights are approximated too low. A slight further improvement is produced by taking the square root of the estimated occurrence frequencies instead of the raw occurrence frequencies themselves. In this way, we obtain the following formulae to approximate the document term weight of a term s in a document text d(i=1,2,3,4):

$$docu\text{-}wght_i'(s,d) = \frac{(\sqrt{zpf(d)}/rnk(s,d))^{1/i}}{\sqrt{\sum_{r \in d}(\sqrt{zpf(d)}/rnk(r,d))^{2/i}}} = \frac{(1/rnk(s,d))^{1/2i}}{\sqrt{\sum_{r \in d}(1/rnk(r,d))^{1/i}}}$$

## DESCRIPTION OF A PREFERRED EMBODIMENT

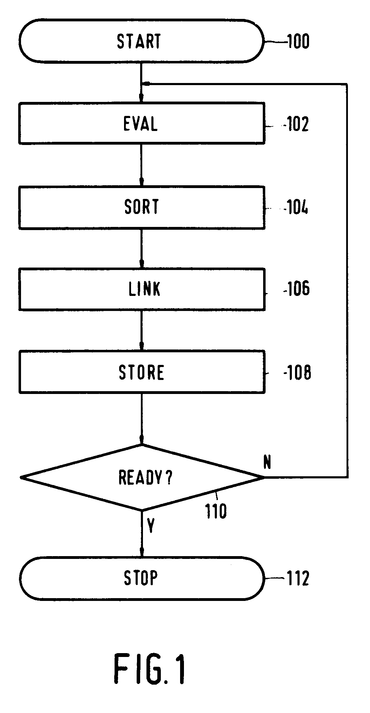

According to a general implementation of the invention, Figure 1 is a flow chart of the method for storing bibliometric information on items in a finite source of text. In block 100 the process is initialized, by assigning intermediate storage space, necessary registers, specifying the postulated relationship between the bibliometric property of the item and its rank number in a linear ordering of all items of its source. In block 102, the items of the source are received one after the other, and evaluated with respect to their linear ordering value. Various possibilities exist therefor. First, this value can be discerned directly from the occurrence of the item, alone or in relation to its environment. Second, it is possible to deduce the bibliometric value itself from the item and translate this into the linear ordering value. This evaluating may require any of a calculatory (such as occurrency summing), histographical or other statistic operation. It is understood that after all items of the finite source have been received it would at most take a finite time to assign the linear ordering value as a scalable quantity for each respective item. In block 104 the items are stored, for example, according to decreasing values of their scalar, or of their scalable quantity, such as alphabetic, logic, or other, and subsequently assigned a rank number. It is possible to subject the items to a standard and uniform address transformation, for example reversing the address sequence, accommodating to finite page length with between-page stringing, but this is not further discussed for brevity. In block 106, the data associated to the source are now linked to the data associated to other sources, for example, those that had been scrutinized earlier. The linking may be done by concatenating. First, for any item identity the system is inspected as to where the first occurrence in the chain for that item was. The data associated with the new source now get an identifier of the source that is next in the sequence of sources featuring this item. Further, each respective item in the data associated with the new source gets an offset that points to the next occurrence of the new item. The tuples of source identifier cum offsets for each item are stored in block 108 in an associated storage location, such as a page. thereafter, the system is ready to revert to block 102 for reception of a next successive source, or to exit. For deletion of a stored source, the procedure is more complicated in tht for each item in the material to be deleted, the preceding occurrence of that item is to be searched. Often, this requires starting at the beginning of a chain of occurrences of a particular item and bridging the sequence position of the data to be deleted. Thereupon, the storage location is again available for other purposes. Of course, if only ignoring the particular source is required, the trick can be done by invalidating the source.

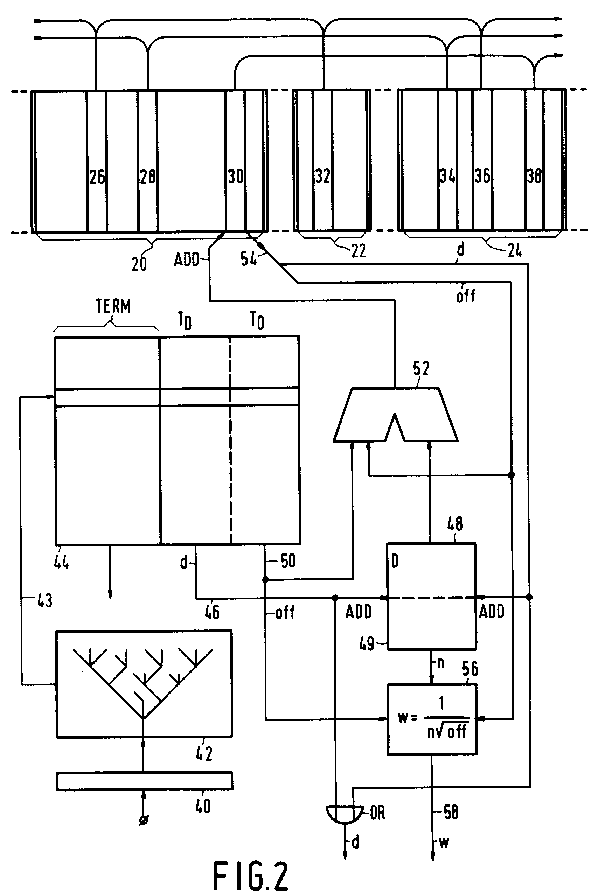

According to a somewhat more specific implementation of the invention, Figure 2 shows the organization of the retrieving of document postings in a full-text document retrieval system, using the Zipf relationship between a term's occurrence frequency rank and its nominal weight. In this skeleton system only three documents are shown stored as 20, 22, 24 respectively each consisting of a number of postings or elements. Each posting may relate to a single lexical term such as a noun, an adverb, a number, or an expression, such as, for example, a mathematical expression. Alternatively, a posting may relate to a plurality of related lexical terms, such as the various ways a verb may be written, or even taking into account misspellings. As shown, document 20 has many different terms, document 24 has fewer lexical terms, document 22 still less. The storage may physically be modular, in that space is assigned on the basis of pages, which has not been shown. Each posting consists of a document identifier and an offset that together indicate the next posting associated to the same lexical term. As shown, postings 26,32,36 are so linked, as are postings 28/34 and 30/38. The postings are in the sequence of decreasing occurrence frequency of the lexical term within the document in question. So in document 20, lexical term associated to posting 26 occurs more frequently, than the one relating to posting 28, the one relating to posting occurring 30 still less. Not all lexical terms occur in all documents, the ranking of occurrence is not uniform among the documents. In the example given, each posting has three bytes, two for indicating the next document in the chain of postings, one for indicating the offset of the next document. This restricts the organization to 256 lexical terms per posting associated with the same lexical term in this document. The total number of lexical terms can be quite higher. If a particular document should be searched for more lexical terms there are two solutions:

a. increase the offset
b. split a document into parts, that each represent a pseudo document.

Now, the retrieval organization is as follows: first the lexical term is presented on input element 40; this of course may be a register, for example accommodating the storage of a code. Next, a search, for example a tree search is executed in device 42 to find the address of that lexical term in term base table 44. By itself, such searching is considered standard technology. Term base table 44 is addressed via line 43. Each address, when used, may contain the lexical term in question, for example, to be used in associative addressing, and, furthermore, a posting of the same format as in the postings storage proper, i.e. 20,22,24. Often, the storage of the term is not necessary, if only the retrieval system has some means for backtracing the term's identity, or, alternatively, if the identity would not be usefull per se, in that eventually, the whole document would be accessed. Now, upon read-out of the posting, the document identifier via line 46 addresses the document base table 48 and the normalization table 49. Table 48 outputs the document base address that is added to the offset on line 50 in adding means 52. The sum allows for physical addressing the first posting of the associated chain, in casu 30. None of the other postings shown are the first one of their associated chain. The read-out of the posting on line 54 allows for both addressing document base table 48 and directly providing the new offset to the left hand input of adding means 52. Synchronized by means not shown, this in each cycle allows to address a next posting of the chain. The last one may address a dummy posting that signals termination. In synchronism with the activation of base table 48, normalization table 49 outputs the normalization factor n. Further, upon provision of offset "off" to weight determination block 56 (either from 44 or from the posting storage such as in 20,22,24) receives the normalization factor n that is permanently stored in block 49 according to its postulated relationship with d. Block 56 according to the formula

$$w = \frac{1}{n\sqrt{off}}$$

calculates the weight for outputting on output 58. The latter output is effected in conjunction with output d. The formula for w accords to the theory given earlier. The weight cum document identifier are thereupon used in the retrieval organization, which may be done along conventional ways. Inasmuch as the present embodiment is directed to the storage organization, in particular as effected in blocks 20,22,24,44,48,52, no further disclosure has been given for reasons of brevity.

**Claims**

1. A method for handling bibliometric information of items in a finite source of text, comprising the steps of:

   for any item in said source, positioning it properly in a linear ordering and therefrom determining the item's rank number in the ordering, and
   for any item storing its rank number as an indication of that unique item's bibliometric property using a postulated relationship between the bibliometric property of the items and their rank number in said linear ordering of all items in said source, and said method for handling of the bibliometric information of corresponding items in any of multiple sources being characterized by comprising the steps of:

      a) assigning to each item in the particular source a sequence number whilst preserving rank order resulting from a linear ordering of the items per source and being expressed as a scalable quantity in a manner that is uniform among the sources to be indicative of the rank number as well as of the position of the bibliometric information of that item in the linked list of the source in question, and
      b) for each source, storing a sequence of tuples, each of which is assigned to a unique item in its source, and each tuple comprising:

         b1) an identifier for a next successive source comprising the same unique item, and
         b2) an offset value indicating both that unique item's sequence number in the source so identified as well as that unique item's rank number in said linear ordering as indication of that unique item's bibliometric property, and

      c) implementing a first table (T) indicative of the first source and an offset in the first source for each item, as well as a second table (D) indicative of the location of the first bibliometric information for each document.

2. A method as claimed in Claim 1, furthermore storing a normalization factor as governed by a postulated relationship between an item's occurrence frequency rank and its nominal weight that depends exclusively on this rank and on the number of different items in a particular sources as variables.

3. A method as claimed in Claim 2, further comprising storing for each document a normalization factor (n) for thereby normalizing any offset received to a weight factor as dependent of the number of postings for the document in question.

4. A method as claimed in Claim 3, wherein said weight is inversely proportional to the square root of the rank of occurrence frequency of the particular term in the sequence.

5. A method for accessing document postings in a full-text retrieval system, said method comprising the steps of:

entering a term identity representation;

searching for an initial posting thereof in a posting base table (T) that has a document identifier and an offset; executing a loop for calculating, in each loop traversal, by means of a most recent document identifier and most recent offset a next posting address, each posting so addressed containing a next document identifier cum offset thereupon featuring as being most recent; and in each traversal also using its offset quantity found as a pointer and also as a weight representation number associated to said term in respect of its occurrence in the document associated to each respective loop traversal, and

wherein said document identifier addresses a document base table (D) for generating a posting address by means of adding of a document base pointer, retrieved from the document base table (D) using the document identifier, to an actual offset, retrieved from the posting base table (T).

6. A method as claimed in Claim 5, further by means of said document identifier addressing a weight normalization factor that combines with an associated offset to a weight quantity.

**Patentansprüche**

1. Verfahren zur Handhabung von bibliometrischen Informationen über Daten in einer endlichen Textquelle, das die folgenden Schritte umfasst:

für jede Dateneinheit in der genannten Quelle die Dateneinheit ordnungsgemäß in einer linearen Ordnung anordnen und daraus die Rangnummer der Dateneinheit in der Ordnung bestimmen, und die Rangnummer für jede Dateneinheit als eine Angabe der bibliometrischen Eigenschaft dieser eindeutigen Dateneinheit speichern durch Nutzung eines postulierten Zusammenhangs zwischen der bibliometrischen Eigenschaft der Daten und ihrer Rangnummer in der genannten linearen Ordnung aller Daten in der genannten Quelle, wobei das genannte Verfahren zur Handhabung der bibliometrischen Informationen über entsprechende Dateneinheiten in einer von mehreren Quellen dadurch gekennzeichnet ist, dass es die folgenden Schritte umfasst:

a) jeder Dateneinheit in der bestimmten Quelle eine Folgenummer zuweisen, und zwar unter Beibehaltung der aus einer linearen Ordnung der Daten pro Quelle resultierenden Rangordnung und ausgedrückt als eine skalierbare Größe auf eine Weise, die für die Quellen gleichförmig ist, um die Rangnummer und die Position der bibliometrischen Informationen über diese Dateneinheit in der verknüpften Liste der betreffenden Quelle anzugeben, und

b) für jede Quelle eine Folge von Tupels speichern, die jeweils einer eindeutigen Dateneinheit in ihrer Quelle zugeordnet sind, wobei jedes Tupel folgendes umfasst:

b1) einen Identifizierer für eine nächstfolgende Quelle mit der gleichen eindeutigen Dateneinheit, und b2) einen Versatzwert, der sowohl die Folgenummer dieser eindeutigen Dateneinheit in der auf diese Weise identifizierten Quelle als auch die Rangnummer dieser eindeutigen Dateneinheit in der genannten linearen Ordnung als Angabe der bibliometrischen Eigenschaft dieser eindeutigen Dateneinheit angibt, und

c) Implementieren einer ersten Tabelle (T), die die erste Quelle und einen Versatz in der ersten Quelle für jede Dateneinheit angibt, sowie einer zweiten Tabelle (D), die den Ort der ersten bibliometrischen Information für jedes Dokument angibt.

2. Verfahren nach Anspruch 1, das weiterhin einen Normalisierungsfaktor speichert, wie er durch einen postulierten Zusammenhang zwischen dem Rang der Vorkommenshäufigkeit einer Dateneinheit und ihrer nominalen Gewichtung vorgegeben wird, die ausschließlich von diesem Rang und von der Anzahl der unterschiedlichen Daten in einer bestimmten Quelle als Variablen abhängt.

3. Verfahren nach Anspruch 2, das weiterhin das Speichern eines Normalisierungsfaktors (n) für jedes Dokument umfasst, um dadurch jeglichen erhaltenen Versatz zu einem Gewichtungsfaktor als abhängig von der Anzahl der Verbuchungen für das betreffende Dokument zu normalisieren.

4. Verfahren nach Anspruch 3, wobei die genannte Gewichtung umgekehrt proportional zur Quadratwurzel des Rangs der Vorkommenshäufigkeit des bestimmten Terms in der Sequenz ist.

5. Verfahren zum Zugreifen auf Dokumentverbuchungen in einem Ganztext-Suchsystem, wobei das genannte Verfahren die folgenden Schritte umfasst:

   Betreten einer Termidentitätsdarstellung;
   Suchen nach einer anfänglichen Verbuchung hiervon in einer Verbuchungsbanktabelle (T), die einen Dokumentidentifizierer und einen Versatz enthält;
   Ausführen einer Schleife, um bei jedem Schleifendurchlauf mit Hilfe des jüngsten Dokumentidentifizierers und des jüngsten Versatzes eine nächste Verbuchungsadresse zu berechnen, wobei jede auf diese Weise adressierte Verbuchung einen nächsten Dokumentidentifizierer mit Versatz enthält, der daraufhin als jüngster gilt;
   und bei jedem Durchlauf auch die Versatzgröße benutzen, die als ein Zeiger und auch als eine Gewichtungsdarstellungsnummer vorliegt, die dem genannten betreffenden Term in Hinblick auf sein Vorkommen in dem zu jedem betreffenden Schleifendurchlauf gehörenden Dokument zugeordnet ist, und
   wobei der genannte Dokumentidentifizierer eine Dokumentenbanktabelle (D) adressiert, um eine Verbuchungsadresse zu erzeugen, indem ein mit dem Dokumentidentifizierer aus der Dokumentenbanktabelle (D) gewonnener Dokumentenbankzeiger auf einen tatsächlichen Versatz addiert wird, der aus der Verbuchungsbanktabelle (T) gewonnen wurde.

6. Verfahren nach Anspruch 5, wobei weiterhin mit dem genannten Dokumentidentifizierer ein Gewichtungsnormalisierungsfaktor adressiert wird, der zusammen mit einem zugehörigen Versatz zu einer Gewichtungsgröße kombiniert wird.

**Revendications**

1. Procédé de traitement d'informations bibliographiques d'articles dans une source de texte finie, comprenant les étapes comprenant :

   pour tout article de ladite source, le positionnement correct de celui-ci dans un aménagement linéaire et, à partir de là, la détermination du numéro de classement de l'article de l'aménagement, et
   pour tout article, le stockage de son numéro de classement comme indication de la propriété bibliographique unique de cet article en utilisant une relation postulée entre la propriété bibliographique des articles et leur numéro de classement dans ledit aménagement linéaire de tous les articles de ladite source, et ledit procédé de traitement d'informations bibliographiques d'articles correspondants de l'une quelconque de sources multiples étant caractérisé en ce qu'il comprend les étapes comprenant :

   a) l'attribution à chaque article de la source particulière d'un numéro de séquence tout en préservant l'ordre de classement résultant d'un aménagement linéaire des articles par source et exprimé sous la forme d'une quantité évaluable d'une manière qui est uniforme parmi les sources pour être indicative du numéro de classement ainsi que de la position des informations bibliographiques de cet article dans la liste associée de la source en question, et
   b) pour chaque source, le stockage d'une séquence de doublets, dont chacune est assignée à un article unique dans sa source, et chaque doublet comprenant :

   b1) un identificateur pour une source successive suivante comprenant le même article unique, et
   b2) une valeur de décalage qui indique à la fois le numéro de séquence de cet article unique de la source ainsi identifiée ainsi que le numéro de classement de cet article unique dans ledit aménagement linéaire en tant qu'indication de la propriété bibliographique de cet article unique, et

   c) la mise en oeuvre d'une première table (T) qui indique la première source et un décalage dans la première source pour chaque article, ainsi que d'une seconde table (D) qui indique l'emplacement des premières informations bibliographiques pour chaque document.

2. Procédé selon la revendication 1, comprenant par ailleurs le stockage d'un facteur de normalisation régi par une relation postulée entre le classement de fréquences d'apparition d'un article et son poids théorique qui dépend exclusivement de ce classement et du nombre de différents articles d'une source particulière en tant que variables.

3. Procédé selon la revendication 2, comprenant en outre le stockage pour chaque document d'un facteur de normalisation (n) pour normaliser ainsi un décalage quelconque reçu en tant que facteur de pondération en fonction du nombre d'index pour le document en question.

**4.** Procédé selon la revendication 3, dans lequel ledit poids est inversement proportionnel à la racine carrée du classement de la fréquence d'apparition du terme particulier dans la séquence.

**5.** Procédé d'accès aux index de documents dans un système de recouvrement plein texte, ledit procédé comprenant les étapes comprenant :

- l'entrée d'une représentation de l'identité d'un terme,
- la recherche d'un index initial de celle-ci dans une table de base d'index (T) qui a un identificateur de document et un décalage,
- l'exécution d'une boucle pour calculer, à chaque passage dans la boucle, au moyen d'un identificateur de document le plus récent et d'un décalage le plus récent, un accès d'index suivant, chaque index auquel on a ainsi accédé contenant un identificateur de document suivant accompagné d'un décalage caractérisé comme étant le plus récent
  et, à chaque passage, l'utilisation également de sa quantité de décalage trouvée comme indicateur et également comme nombre de représentation de poids associé audit terme par rapport à son apparition dans le document associé à chaque passage de boucle respectif, et
- dans lequel ledit identificateur de document accède à une table de base de documents (D) pour générer un accès d'index au moyen de l'addition d'un indicateur de base de documents, recouvré à partir de la table de base de documents (D) en utilisant l'identificateur de document, à un décalage réel recouvré à partir de la table de base d'index (T).

**6.** Procédé selon la revendication 5, comprenant par ailleurs l'accès, au moyen dudit identificateur de document, à un facteur de normalisation de poids qui se combine avec un décalage associé à une quantité de poids.

```
          ┌─────────────────────┐
          │        START        │──100
          └─────────────────────┘
                     │
                     ▼
          ┌─────────────────────┐
          │        EVAL         │── 102
          └─────────────────────┘
                     │
                     ▼
          ┌─────────────────────┐
          │        SORT         │── 104
          └─────────────────────┘
                     │
                     ▼
          ┌─────────────────────┐
          │        LINK         │── 106
          └─────────────────────┘
                     │
                     ▼
          ┌─────────────────────┐
          │        STORE        │── 108
          └─────────────────────┘
                     │
                     ▼
              ◇ READY ? ◇ ──N──
                   110
                     │ Y
                     ▼
          ┌─────────────────────┐
          │        STOP         │── 112
          └─────────────────────┘
```

FIG.1

FIG.2